# EUROPEAN PATENT SPECIFICATION

(11) **EP 2 962 009 B1**
(45) Date of publication and mention of the grant of the patent: **22.05.2019**
(21) Application number: 14708696.1
(22) Date of filing: 26.02.2014
(51) Int. Cl.: F16D 65/12, F16D 66/00, B60T 8/32

(54) **DISC BRAKE DISC AND PHONIC WHEEL**
SCHEIBENBREMSSCHEIBE UND PHONISCHES RAD
DISQUE DE FREIN À DISQUE ET ROUE PHONIQUE

(30) Priority: 26.02.2013 IT MI20130272; 26.02.2013 IT MI20130275; 26.02.2013 IT MI20130276
(43) Date of publication of application: 06.01.2016
(73) Proprietor: Piaggio&C. S.p.A., 56025 Pontedera (Pisa) (IT)
(72) Inventor: CITTI, Tulio, I-56025 Pontedera Pisa (IT); ROSELLINI, Walter, I - 56025 Pontedera Pisa (IT)
(74) Representative: Crippa, Paolo Ernesto
(86) International application number: PCT/IB2014/059266
(87) International publication number: WO 2014/132202

(56) References cited:
- DE-A1- 19 637 482
- DE-A1-102011 077 034
- US-A- 4 061 213
- US-A1- 2004 140 166

## Description

### . Field of the invention

The present invention relates to a disc assembly for disc brake comprising a brake rotor and a phonic wheel, or excitation ring, capable of generating a signal in a facing or an opposite sensor that is proportional, for example, to the rotation, or signals derived thereto, such as the speed of the phonic wheel.

Particularly, the present invention relates to a disc assembly for disc brake comprising a brake rotor of predefined rotational axis having a disc-shaped brake body comprising a brake disc attachment portion to a brake disc support, provided with an attachment portion rest surface suitable to abut against said brake disc support. Said disc-shaped brake body further comprises a braking portion forming a braking band having opposite first and second braking surfaces that are substantially mutually parallel. Said rest surface of the brake disc attachment portion is, under unworn conditions, substantially coplanar to said first braking surface. Said assembly further comprises an excitation ring or pulse generating ring or phonic wheel having a predefined rotational axis and having a phonic wheel disc-shaped body comprising a surface facing a phonic wheel reading sensor to detect the rotation, or signals derived thereto, of the phonic wheel. Said facing surface comprises a plurality of recesses, or reliefs, evenly distributed circumferentially and suitable to face said sensor.

As it is known, phonic wheels are arranged connected to the rotating members of the vehicle to detect the member rotation and, in some cases, to detect the absence of a rotation for a non-null speed of the vehicle in order to determine whether an undesired locking of the vehicle wheels has occurred, for example, during the braking action of the vehicle. In this case, the phonic wheel is arranged near to the brake disc so as to detect the accidental locking of the wheel to which the brake disc is connected.

Other times, the phonic wheel is arranged in the proximity of a driving wheel of the vehicle to detect an excess of rotation thereof in the acceleration step.

### . Known state of the art

From the document JP2008224216A of JTEKT CORP., a wheel rolling bearing is known, which comprises a wheel inner member connected to a body side member of the vehicle, and a wheel outer member integrally arranged between a flange, to which a rotor of the brake is secured by a rotor flange portion projecting while tampering towards the rotational axis, and rolling bodies arranged between the wheel inner member and the wheel outer member. Said brake rotor is provided with a pulse generating ring in which a multiplicity of parts to be detected is arranged, which parts face a vehicle speed detector arranged at even intervals in the circumferential direction. Said pulse generating ring is formed in the brake rotor attachment portion proximate to the flange connection, connected to the inner edge of the brake rotor portion intended to exert the braking action.

This known solution is strongly affected by the deformation generated by the heat produced during the braking action, which deforms the brake rotor portion intended to exert the braking action by arching the pulse generating ring tampering proximate to the constraint portion having a highly different section relative to the braking band. Furthermore, this known solution is bulky and unsuitable, also due to the deformation of the brake rotor portion, to assembling operations in very narrow settings between a wheel of the vehicle and a brake support and transmission of the motion to the wheel.

From the document JP2009286257 of JTEKT CORP., a brake disc is known, which is provided with a braking portion connected to a bearing connecting flange by a cylindrical portion arranged coaxial to the brake disc rotational axis, wherein a high number of grooves is formed radially on a joint folded part of the band portion. These grooves are manufactured so as to be detected by a rotational frequency detecting sensor.

This solution, by providing to arrange a multiplicity of parts to be detected in line with the cylindrical disc portion extending axially, is even more affected by the deformation generated by the heat produced during the braking action that deforms the brake rotor portion intended to exert the braking action by arching the bell-shaped portion extending axially and amplifying the deformation or displacement of the pulse generating ring, thus also considerably changing the speed measurements.

Furthermore, this known solution turns out to be still more bulky and unsuitable, also due to the deformation of the brake rotor portion relative to the axially extending cylindrical portion, for assembling operations in very narrow settings between a wheel of the vehicle and a support of the brake and transmission of the motion to the wheel.

Similar solutions are known also from the documents EP1762743B1 of INT. TRUCK INTELLECTUAL PROP. CO., US7274188B2 of HONDA MOTOR CO. LTD, JP4256860 of YAMAHA MOTOR CO. LTD, EP1088751 of HONDA MOTOR CO. LTD, JP6249273 of AISIN TAKAOKA LTD, where the phonic wheel is laterally associated to the disc, allowing not to be affected by the deformation caused by the thermal increase of the brake disc, but involving an undesired increase in the overall dimensions of the system, especially in the axial direction to the disc. In addition, similar solutions are known from DE19637482A1, DE102011077034A1 and US2004140166A1.

Therefore, all these known solutions turn out to be very difficult to be used, since they are bulky, or, when they are compact, they turn out to be strongly affected by the deformation caused by the temperature increase of the brake disc, compromising the desired measurement, for example, of the vehicle wheel speed. On the contrary, the solutions providing for a phonic wheel unconstrained to the disc brake disc turn out to be bulky and subjected to the risk of building-up debris between phonic wheel and brake disc, thus compromising the desired measurement, for example, of the vehicle wheel speed.

### . Solution

Therefore, it is the object of the present invention to devise a disc assembly for disc brake that allows reducing the overall dimensions and allows housing it between the support and the wheel rim also in motor-scooters or scooters, while allowing moving the disc brake caliper body nearer to the support without interfering with the phonic wheel.

Such a problem is solved by a disc assembly for disc brake as defined in the appended claim 1, as well as a motor vehicle according to claim 11.

In accordance with a general embodiment of the invention, a disc assembly for disc brake is provided, comprising:
- a brake rotor having a predefined rotational axis; said brake rotor having a disc-shaped brake body; said disc-shaped brake body comprising a brake disc attachment portion to a brake disc support having an attachment portion rest surface suitable to abut against said brake disc support; said brake disc attachment portion comprises securing means receiving seats suitable to receive securing means of the brake rotor to a brake disc support thereof; said disc-shaped brake body comprising a braking portion forming a braking band having opposite first and second braking surfaces; said first and second braking surfaces being substantially mutually parallel and defining therebetween, under unworn conditions, a braking band thickness; wherein said rest surface of the brake disc attachment portion being, under unworn conditions, substantially coplanar to said first braking surface;
- an excitation ring, or pulse generating ring or phonic wheel, having a predefined rotational axis; said phonic wheel having a phonic wheel disc-shaped body comprising a facing surface; said facing surface being suitable to face a sensor; said facing surface comprises a plurality of recesses or reliefs evenly distributed circumferentially and suitable to face said sensor;
- a phonic wheel reading sensor to detect the rotation, or derived signals, of the phonic wheel;
- securing means of the brake rotor to the brake disc support thereof
   **.** wherein
- said disc-shaped brake body and said phonic wheel disc-shaped body are in a single piece;
- said securing means receiving seats comprise embedding widenings suitable to receive by embedding portions of the securing means so that they do not project relative to the brake disc attachment portion, and wherein said embedding widenings are arranged on the same side of the surface facing the sensor of the phonic wheel disc-shaped body, so that said securing means are inserted in said receiving seats on the same side of the phonic wheel reading sensor.

In accordance with a further embodiment, a disc assembly for disc brake comprising:
- a brake rotor having a predefined rotational axis; said brake rotor having a disc-shaped brake body; said disc-shaped brake body comprising a brake disc attachment portion to a brake disc support having an attachment portion rest surface suitable to abut against said brake disc support; said disc-shaped brake body comprising a braking portion forming a braking band having opposite first and second braking surfaces; said first and second braking surfaces being substantially mutually parallel;
- an excitation ring or pulse generating ring or phonic wheel having a predefined rotational axis; said phonic wheel having a phonic wheel disc-shaped body comprising a facing surface; said facing surface being suitable to face a phonic wheel reading sensor to detect the rotation, or derived signals, of the phonic wheel; said facing surface comprises a plurality of recesses or reliefs evenly distributed circumferentially and suitable to face said sensor.

Advantageously, said disc-shaped brake body and said phonic wheel disc-shaped body are in a single piece, said rest surface of the brake disc attachment portion is, under unworn conditions, substantially coplanar to said first braking surface and said surface facing the sensor of the phonic wheel disc-shaped body is substantially coplanar to one of the braking surfaces of the braking band.

By virtue of the fact that the assembly provides for, *inter alia,* that the disc-shaped brake body and the phonic wheel disc-shaped body are in a single piece, as well as the rest surface of the brake disc attachment portion substantially coplanar to said first braking surface and said surface facing the sensor of the phonic wheel disc-shaped body coplanar to one of the braking surfaces of the braking band, it is possible to avoid that a deformation of the braking band of the brake disc makes the measurement by the sensor of the arrangement of the plurality of recesses or reliefs inaccurate and, at the same time, to ensure reduced dimensions of the assembly, which allow maintaining large dimensions of the caliper body, hence an approaching thereof to the brake disc support. At the same time, it is also possible to avoid that spaces are formed between the phonic wheel and the brake disc, avoiding that clefts are formed where dirt or debris may build-up, which could compromise the desired measurement by the sensor of the recesses and reliefs of the phonic wheel.

By virtue of what has been stated above, it is possible to arrange the sensor on a side of the disc brake disc, thereby concurring to reduce even more the overall assembly dimensions.

Particularly, by virtue of what has been stated above, it is possible to avoid the use of a separate phonic wheel, allowing using a caliper body having larger dimensions compared to that usable with a separate phonic wheel that is provided with disc or support securing means, thus allowing possibly using a disc brake disc having a maximum diameter that is lesser, while maintaining an equal braking action by virtue of an unaltered braking surface, while allowing lesser overall dimensions of the brake disc, phonic wheel, sensor and caliper body assembly.

By virtue of what has been stated above, this solution turns out to be not affected by the deformation generated by the heat produced during the braking action that, particularly, since it does not find disc portions that extend axially, it is not able to deform the brake rotor portion intended to exert the braking action, and it avoids arching the phonic wheel, thus avoiding a degradation of the measurements carried out by the opposite sensor.

### . Figures

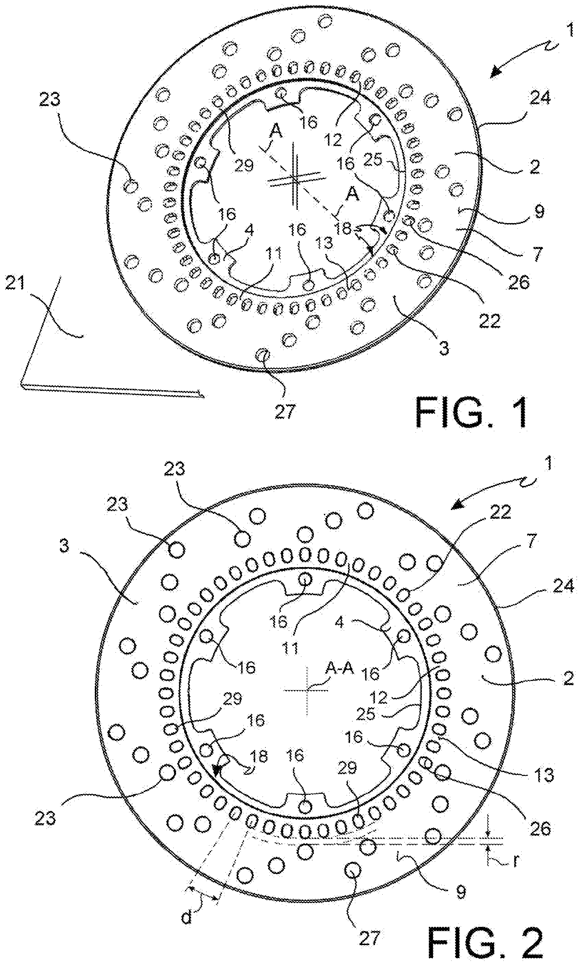

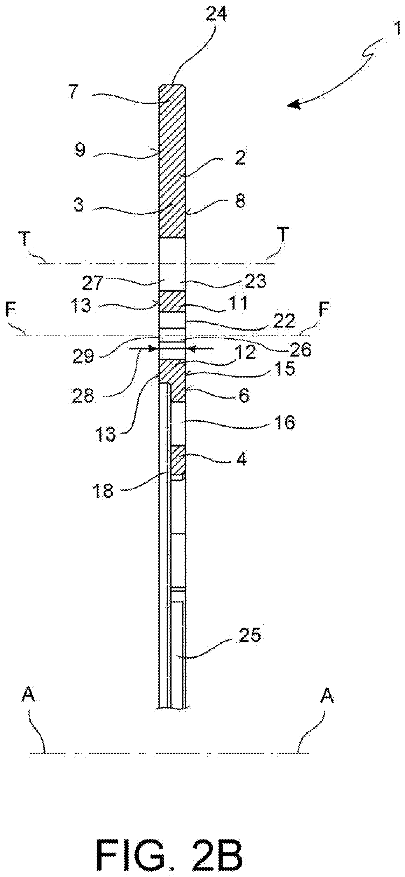

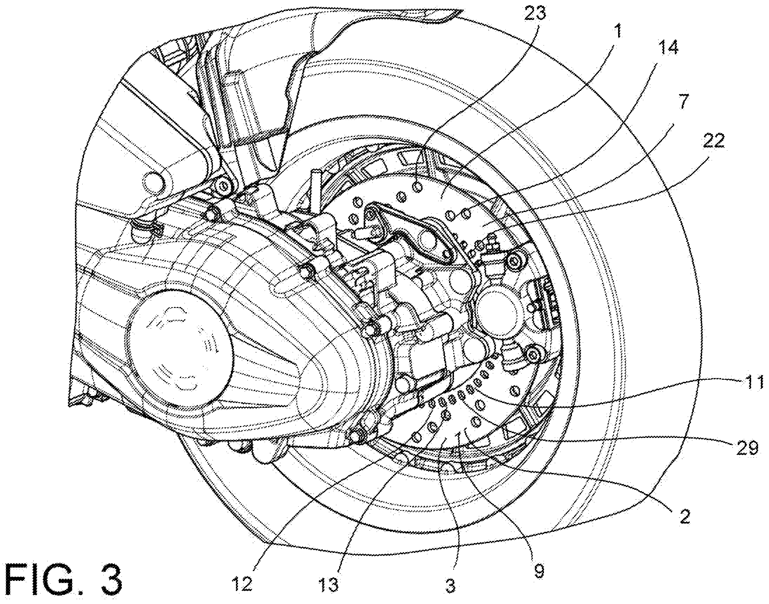

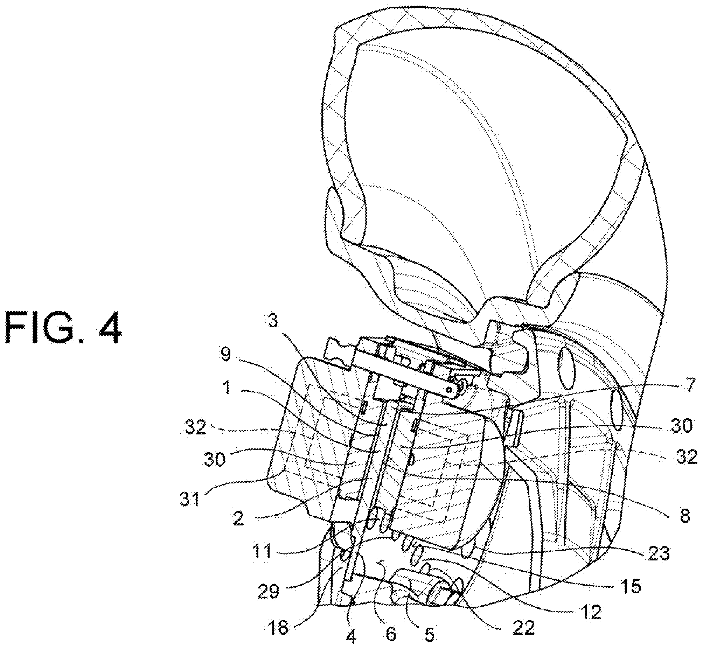

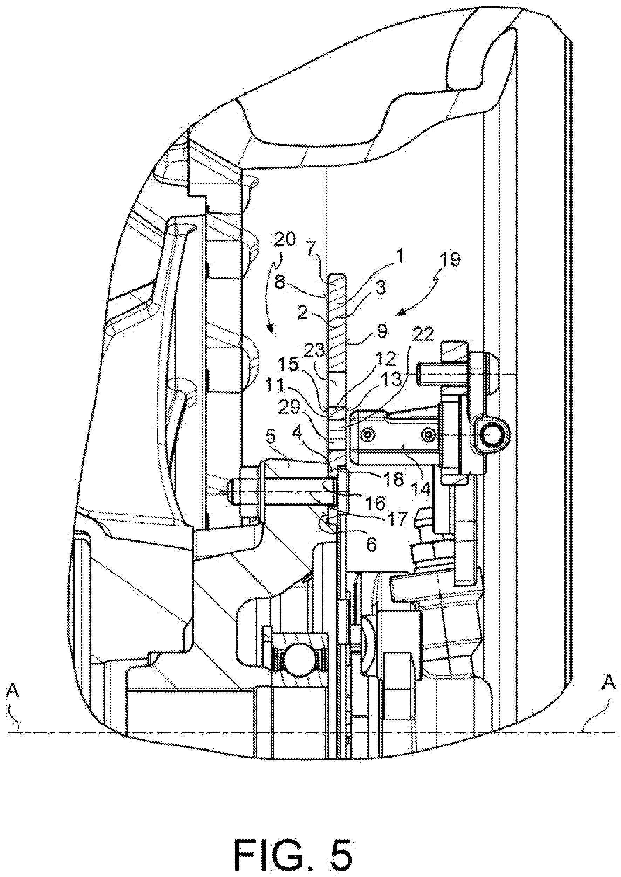

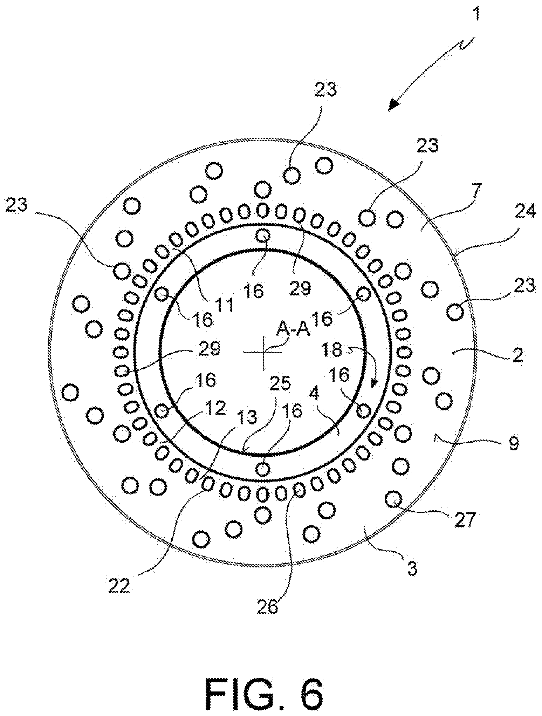

Further characteristics and advantages of the assemblies according to the invention will be apparent from the description set forth below of preferred implementation examples thereof, given by way of illustrative, non-limiting example, with reference to the appended Figures, in which:
**.** - Fig. 1 represents in axonometric view a disc assembly for disc brake comprising a brake rotor and a phonic wheel;
**.** - Fig. 2a represents a front view of the assembly of Fig. 1;
**.** - Fig. 2b represents a detail of a cross-section according to the line III-III of Fig. 2 of the assembly of Fig. 1;
**.** - Fig. 3 illustrates in a support side perspective view a detail of a two-wheeled vehicle in which an assembly of disc brake disc is mounted;
**.** - Fig. 4 and Fig. 5 represent two cross-sections at the rotational axis A-A of the detail of the vehicle of Fig. 3:
**.** - Fig. 6 represents in front view a disc assembly for disc brake comprising a brake rotor and a phonic wheel according to a further embodiment.

### . Description of some preferred implementation examples

With reference to the above-mentioned Figures, and in accordance with a general embodiment, a disc assembly for disc brake comprises a brake rotor, said brake rotor has a predefined rotational axis A-A.

Said brake rotor comprises a disc-shaped brake body 3 having a brake disc attachment portion 4 suitable to the connection to a brake disc support 5. The brake disc attachment portion 4 comprises an attachment portion rest surface 6 suitable to abut against said brake disc support 5.

Said disc-shaped brake body 3 further comprises a braking portion forming a braking band 7, having opposite braking surfaces, a first and second braking surfaces 8, 9.

Said first and second braking surfaces 8, 9 are arranged substantially mutually parallel.

Said disc assembly for disc brake further comprises an excitation ring, also referred to as a pulse generating ring or, more generally, phonic wheel 11. Said phonic wheel 11 has a predefined rotational axis A-A, which, in accordance with an embodiment, coincides with said rotational axis of the brake rotor 2.

Said phonic wheel 11 has a phonic wheel disc-shaped body 12 comprising a facing surface 13. Said facing surface 13 is a surface suitable to face a sensor capable of reading the phonic wheel 14, for example, to detect the rotation, or derived signals, such as the rotational speed, of the phonic wheel 11 and the members of the vehicle connected thereto, such as, for example, of a disc brake disc and the vehicle wheel.

Said facing surface 13 comprises a plurality of recesses or reliefs 29. Said plurality is evenly and circumferentially distributed and it is suitable to face said sensor 14.

With particular advantage, said disc-shaped brake body 3 and said phonic wheel disc-shaped body 12 are in a single piece. For example, but not necessarily, said disc-shaped brake body 3 and said phonic wheel disc-shaped body 12 are obtained by cutting or by machining of a planar plate, but they may also be obtained by moulding or casting.

Advantageously, said rest surface 6 of the brake disc attachment portion 4 is, under unworn conditions of the braking band, substantially coplanar to said first braking surface 8.

. With further advantage, said surface 13 facing the sensor of the phonic wheel disc-shaped body 12 is substantially coplanar to one of the braking surfaces 9 of the braking band 7.

In accordance with an embodiment, said phonic wheel disc-shaped body 12 comprises a second phonic wheel surface 15 opposite said surface 13 facing the sensor. In accordance with an embodiment, said facing surface 13 and said second phonic wheel surface 15 are substantially mutually parallel.

In accordance with an embodiment, said surface 13 facing the sensor of the phonic wheel disc-shaped body 12 is substantially coplanar to said second braking surface 9 of the braking band 7.

In accordance with an embodiment, said brake disc attachment portion 4 comprises securing means receiving seats 16 suitable to receive securing means 17 of the brake rotor 2 to a brake disc support 5 thereof. In accordance with an embodiment, said securing means receiving seats 16 comprise at least one embedding widening or undercut 18 suitable to receive by embedding portions of the securing means 17, for example, a screw head, so that they do not project in a direction parallel to the axis A-A relative to the brake disc attachment portion 4.

In accordance with an embodiment, said at least one embedding undercut 18 is arranged on the same side of the surface 13 facing the sensor of the phonic wheel disc-shaped body 12. By virtue of this provision, this brake rotor and phonic wheel assembly, as well as the sensor, the caliper body 31 of the braking system, the wheel of the vehicle 33, are all mounted on the same side of the support and the transmission of the vehicle itself.

. In accordance with an embodiment, said attachment portion rest surface 6 is orthogonal to said rotational axis A-A.

In accordance with an embodiment, said first and second braking surfaces 8, 9 are substantially mutually parallel and define therebetween, under unworn braking band conditions, a predefined braking band thickness 10. In accordance with an embodiment, said phonic wheel disc-shaped body 12 comprises a second phonic wheel surface 15 opposite said sensor facing surface 13. Said facing surface 13 and said second phonic wheel surface 15 are substantially mutually parallel and mutually define a predefined phonic wheel thickness 28.

In accordance with an embodiment, said braking band thickness 10 is substantially equal to said phonic wheel thickness 28.

. In accordance with an embodiment, said plurality of recesses or reliefs 29, for example, but not necessarily, holes, of said facing surface 13 of the phonic wheel 11 have an extension having an axis F-F that is substantially parallel to the brake rotor 2 axis A-A or the phonic wheel 11 axis A-A. In this manner, it is possible to arrange the sensor 14 laterally to the phonic wheel 11 and concur to decreasing the overall dimensions of the assembly cooperating with the sensor.

. In accordance with an embodiment, said recesses or reliefs 29, for example, but not necessarily, holes, extend with an axis or along an axis F-F parallel to the extension axis or axis T-T along which braking band holes 23 extend, which are provided for in the portion of the braking band affected by the braking surfaces 8, 9, i.e., the surfaces that are brushed by disc brake pads 30 affected by thrust means 32 housed in a disc brake caliper body 31 of a braking system of the vehicle.

In accordance with an embodiment, said braking band holes 23 are suitable to cool the braking band 7 and grind the disc brake pads 30 housed in a disc brake caliper body 31 and biased by thrust means 32 to abut against the braking surfaces 8, 9 of the braking band 7 to exert a braking action on a vehicle on which said assembly 1 is associated.

In accordance with an embodiment, said recesses or reliefs 29, for example, holes, of the phonic wheel 11 have dimensions transversal to the extension F-F thereof, for example, the diameter thereof, having an extent substantially equal to the braking band thickness 10.

In accordance with an embodiment, said recesses or reliefs 29, for example, holes, of the phonic wheel 11 have dimensions transversal to the extension F-F thereof, for example the diameter thereof, having an extent substantially equal to the phonic wheel thickness 28.

In accordance with an embodiment, said recesses or reliefs 29, for example, holes, of the phonic wheel 11 form, in the circumferential direction with the remaining portion of phonic wheel disc-shaped body 12, a ratio of substantially 50%. For example, said recesses or reliefs are holes 29. By measuring in the circumferential direction and passing through the center of said holes 29, in accordance with an embodiment, a ratio between the spaces of the holes and the solid part of the phonic wheel body is detected, determining a ratio which is substantially of 50%.

In accordance with an embodiment, said recesses or reliefs are through holes 29.

In accordance with an embodiment, said recesses or reliefs 29 have a section transversally to the extension F-F thereof that is substantially oval-shaped, for example, enlarged in the direction radial to the phonic wheel rotational axis A-A.

In accordance with an embodiment, said recesses or reliefs 29 are arranged at such a distance from the braking band 7 as to avoid disturbances in the detection by the sensor 14. For example said recesses or reliefs 29 are spaced apart from each other by a predefined phonic wheel distance "d" and said recesses or reliefs 29 are spaced from the braking band 7, particularly its braking surface 8, 9, substantially by a distance "r" equal to said phonic wheel distance "d".

. In accordance with an embodiment, a second disc assembly for disc brake 19 comprises a brake rotor 2 having a predefined rotational axis A-A.

Said brake rotor 2 comprises a disc-shaped brake body 3. Said disc-shaped brake body 3 comprises a brake disc attachment portion 4 to a brake disc support 5 having an attachment portion rest surface 6 suitable to abut against said brake disc support 5.

Said brake disc attachment portion 4 comprises securing means receiving seats 16 suitable to receive securing means 17 of the brake rotor 2 to the brake disc support 5 thereof.

Said disc-shaped brake body 3 comprises a braking portion forming a braking band 7 having opposite first and second braking surfaces 8, 9. Said first and second braking surfaces 8, 9 are substantially mutually parallel and defining therebetween, under unworn conditions, a braking band thickness 10.

Advantageously, said rest surface 6 of the brake disc attachment portion 4 is, under unworn conditions, substantially coplanar to said first braking surface 8.

Said second disc assembly for disc brake 19 further comprises an excitation ring or pulse generating ring or phonic wheel 11 having a predefined rotational axis A-A.

Said phonic wheel 11 comprises a phonic wheel disc-shaped body 12 comprising a facing surface 13. Said facing surface 13 is suitable to face a sensor 14.

Said facing surface 13 comprises a plurality of recesses or reliefs evenly and circumferentially distributed and suitable to face said sensor 14.

Said second disc assembly for disc brake 19 further comprises a phonic wheel reading sensor 14 to detect the rotation, or derived signals, of the phonic wheel 11.

Said second disc assembly for disc brake 19 further comprises securing means 17 of the brake rotor 2 to the brake disc support 5 thereof.

Advantageously, in said second disc assembly for disc brake 19, said disc-shaped brake body 3 and said phonic wheel disc-shaped body 12 are in a single piece.

Advantageously, in said second disc assembly for disc brake 19, said securing means receiving seats 16 comprise embedding widenings or recesses 18 suitable to receive by embedding portions of the securing means 17, by way of non-limiting example, screw heads, so that these do not project relative to the brake disc attachment portion 4. Said embedding widenings 18 are advantageously arranged on the same side of the surface 13 facing the sensor of the phonic wheel disc-shaped body 12, so that said securing means 17 are inserted in said receiving seats 16 on the same side of the phonic wheel reading sensor 14.

. In accordance with an embodiment, a third disc assembly for disc brake 20 comprises a brake rotor 2 having a predefined rotational axis A-A. Said brake rotor 2 comprises a disc-shaped brake body 3 having a brake disc attachment portion 4 to a brake disc support 5 having an attachment portion rest surface 6 suitable to abut against said brake disc support 5.

Advantageously, said brake disc attachment portion 4 comprises securing means receiving seats 16 suitable to receive securing means 17 of the brake rotor 2 to the brake disc support 5 thereof.

Said disc-shaped brake body 3 further comprises a braking portion forming a braking band 7 having opposite first and second braking surfaces 8, 9. Said first and second braking surfaces 8, 9 are substantially mutually parallel and defining therebetween, under unworn conditions, a braking band thickness 10.

Advantageously, said rest surface 6 of the brake disc attachment portion 4 is, under unworn conditions, substantially coplanar to said first braking surface 8.

Said third disc assembly for disc brake 20 further comprises an excitation ring or pulse generating ring or phonic wheel 11 having a predefined rotational axis A-A. Said phonic wheel 11 has a phonic wheel disc-shaped body 12 comprising a facing surface 13. Said facing surface 13 is advantageously suitable to face a sensor 14 and comprises a plurality of recesses or reliefs 22 evenly and distributed circumferentially so as to be suitable to face said sensor 14.

Advantageously, said disc-shaped brake body 3 is obtained from a planar plate 21 forming in a single piece the phonic wheel disc-shaped body 12 avoiding bendings or curvatures of the planar plate 21 outside the plane thereof.

Advantageously, said forming takes place so that at least the surface 13 facing the sensor of the phonic wheel disc-shaped body 12 is coplanar to at least one of the braking surfaces 9 of the braking band 7.

In accordance with an embodiment, said forming is a cutting operation of the brake disc disc-shaped body 3 and at the same time of the phonic wheel disc-shaped body 12 from a single planar plate.

In accordance with an embodiment, by said cutting operation of the brake disc 3 and phonic wheel 12 disc-shaped bodies also band holes 23 in the braking band 7 and phonic wheel recesses 22, by way of non-limiting example, phonic wheel holes, are obtained.

In accordance with an embodiment, by said cutting operation of the brake disc 3 and phonic wheel 12 disc-shaped bodies also securing means receiving seats 16 are obtained.

In accordance with an embodiment, said phonic wheel recesses 22 are through holes obtained by cutting or, alternatively, by milling or piercing.

In accordance with an embodiment, the cutting of the brake disc 3 and phonic wheel 12 disc-shaped bodies, of the band holes 23, and of the phonic wheel recesses 22 takes place in a single positioning so as to reduce the parallelism tolerances between brake disc-shaped body edge surfaces 24, phonic wheel disc-shaped body edge surfaces 25, phonic wheel recesses edge surfaces 26 and braking band holes edge surfaces 27.

Of course, those skilled in the art, with the aim of meeting contingent, specific needs, will be able to make a number of modifications and variations to the assembly according to the invention, all anyhow falling within the protection scope of the invention, as defined by the following claims.

In accordance with an embodiment, the disc assembly for disc brake 1 comprises a brake rotor 2 having a predefined rotational axis A-A. Said brake rotor 2 has a disc-shaped brake body 3. Said disc-shaped brake body 3 comprises a brake disc attachment portion 4 to a brake disc support 5 forming a continuous circular ring and defining an attachment portion rest surface 6 suitable to abut against said brake disc support 5.

In accordance with an embodiment, said brake disc attachment portion 4 to a brake disc support 5 forming a continuous circular ring has a thickness that substantially equal to that of the braking band 7 and, at the securing means receiving seats 16, localized lowerings are provided for, which are suitable to receive the head of the securing means, reducing the axial overall dimensions of the securing means, while avoiding that the brake disc attachment portion 4 is asymmetrical to a central plane on which the braking band 7 lies, stabilizing more on the thermal standpoint the brake disc attachment portion 4 and the integral phonic wheel 11, even more decreasing any disturbance by the heat produced by the braking action, which heats the braking band 7, the phonic wheel 11 and the brake disc attachment portion 4 on the measurement by the sensor 14.

In accordance with an embodiment, said recesses or reliefs of phonic wheel 22 are blind or through holes and having a radially elongated oval shape or a circular shape.

. In accordance with an embodiment, said phonic wheel 11 is arranged radially, with respect to the rotational axis, between said brake disc attachment portion 4 and said braking portion forming the braking band 7. This solution allows moving the sensor 14 away from the brake disc support 5 and making even compacter of with reduced overall the brake disc assembly.

In accordance with an embodiment, said phonic wheel 11 is arranged radially, with respect to the rotational axis, between said brake disc attachment portion 4 and said braking portion forming the braking band 7 and at the same time said recesses or reliefs 29 are arranged at such a distance from the braking band 7 as to avoid disturbances in the detection by the sensor 14, for example said recesses or reliefs 29 are spaced apart from each other by a predefined phonic wheel distance "d" and said recesses or reliefs 29 are spaced from the braking band 7 substantially by a distance "r" equal to said phonic wheel distance "d". This embodiment turns out to be still compacter or less bulky, while keeping high performance for the sensor.

In accordance with an embodiment, a vehicle, particularly, but not necessarily, a motor vehicle, comprises a wheel 33 operatively connected to a transmission capable of applying a torque to said wheel 33. Advantageously, a disc assembly for disc brake 19 is connected to said wheel as in accordance with any of the embodiments described above.

In accordance with an embodiment, a vehicle, particularly, but not necessarily, a motor vehicle, comprises a wheel 33 operatively connected to a transmission capable of applying a torque to said wheel 33. Advantageously, a disc assembly for disc brake 19 is connected to said wheel, having said phonic wheel 11 arranged radially, with respect to the rotational axis, between said brake disc attachment portion 4 and said braking portion forming the braking band 7. This solution allows moving the sensor 14 away from the brake disc support 5 and the transmission, and making the brake disc assembly even compacter or with reduced overall dimensions. This embodiment allows having a brake disc assembly with a seat connecting the brake disc to the support thereof that is particularly wide or large, so as to allow the connection of the disc even to large supports suitable to operative connections with power transmissions.

In accordance with an embodiment, a vehicle, particularly, but not necessarily, a motor vehicle, comprises a wheel 33 operatively connected to a transmission capable of applying a torque to said wheel 33. Advantageously, a disc assembly for disc brake 19 is connected to said wheel, having said phonic wheel 11 arranged radially, with respect to the rotational axis, between said brake disc attachment portion 4 and said braking portion forming the braking band 7 and at the same time having said recesses or reliefs 29 arranged at such a distance from the braking band 7 as to avoid disturbances in the detection by the sensor 14, for example said recesses or reliefs 29 are spaced apart from each other by a predefined phonic wheel distance "d" and said recesses or reliefs 29 are spaced from the braking band 7 substantially by a distance "r" equal to said phonic wheel distance "d". this embodiment turns out to be still compacter or less bulky, even when it is connected to the vehicle driving wheel, especially on a motor vehicle, while maintaining high performance for the sensor.

In accordance with an embodiment, this previous embodiment comprises said recesses or reliefs 29 obtained as through holes, turning out to be a disc assembly for disc brake 19 even simpler to be manufactured, besides having compact dimensions.

| REFERENCES | |
|---|---|
| 1 | disc assembly for disc brake |
| 2 | brake rotor |
| 3 | disc-shaped brake body |
| 4 | brake disc attachment portion |
| 5 | brake disc support |
| 6 | rest surface |
| 7 | braking band |
| 8 | first braking surface |
| 9 | second braking surface |
| 10 | braking band thickness |
| 11 | phonic wheel |
| 12 | phonic wheel disc-shaped body |
| 13 | surface facing the phonic wheel body sensor |
| 14 | sensor |
| 15 | second phonic wheel surface |
| 16 | securing means receiving seats |
| 17 | securing means |
| 18 | embedding recess |
| 19 | second brake disc and phonic wheel assembly, sensor and support securing means |
| 20 | third brake disc and phonic wheel assembly |
| 21 | planar plate from which brake rotor and phonic wheel are cut |
| 22 | phonic wheel recesses or reliefs |
| 23 | braking band holes |
| 24 | brake body edge surfaces |
| 25 | phonic wheel edge surfaces |
| 26 | phonic wheel recesses edge surfaces |
| 27 | braking band holes edge surfaces |
| 28 | phonic wheel thickness |
| 29 | phonic wheel recesses or holes |
| 30 | disc brake pads |
| 31 | disc brake caliper body |
| 32 | thrust means |
| 33 | vehicle wheel |

## Claims

1. A disc assembly for disc brake (19) comprising:
- a brake rotor (2) having a predefined rotational axis (A-A); said brake rotor (2) having a disc-shaped brake body (3); said disc-shaped brake body (3) comprising a brake disc attachment portion (4) to a brake disc support (5) having an attachment portion rest surface (6) suitable to abut against said brake disc support (5); said brake disc attachment portion (4) comprises securing means receiving seats (16) suitable to receive securing means (17) of the brake rotor (2) to a brake disc support (5) thereof; said disc-shaped brake body (3) comprising a braking portion forming a braking band (7) having opposite first and second braking surfaces (8, 9); said first and second braking surfaces (8, 9) being substantially mutually parallel and defining therebetween, under unworn conditions, a braking band thickness (10); wherein said rest surface (6) of the brake disc attachment portion (4) being, under unworn conditions, substantially coplanar to said first braking surface (8);
- an excitation ring or pulse generating ring or phonic wheel (11) having a predefined rotational axis (A-A); said phonic wheel (11) having a phonic wheel disc-shaped body (12) comprising a facing surface (13); said facing surface (13) being suitable to face a sensor (14); said facing surface (13) comprises a plurality of recesses or reliefs evenly distributed circumferentially and suitable to face said sensor (14) ;
- a phonic wheel reading sensor (14) to detect the rotation, or derived signals, of the phonic wheel (11);
- securing means (17) of the brake rotor (2) to the brake disc support (5) thereof; and wherein
- said disc-shaped brake body (3) and said phonic wheel disc-shaped body (12) are in a single piece;
- said securing means receiving seats (16) comprise embedding widenings (18) suitable to receive by embedding portions of the securing means (17) so that they do not project relative to the brake disc attachment portion (4) and wherein said embedding widenings (18) are arranged on the same side of the surface (13) facing the sensor of the phonic wheel disc-shaped body (12), so that said securing means (17) are inserted in said receiving seats (16) on the same side of the phonic wheel reading sensor (14); and wherein
said facing surface (13) comprises a plurality of recesses or reliefs (29) evenly distributed circumferentially and suitable to face said sensor (14);
**characterized in that**
said recesses or reliefs are through holes;
said phonic wheel (11) is arranged radially with respect to the rotational axis between said brake disc attachment portion (4) and said braking portion forming the braking band (7).

2. The disc assembly for disc brake (1) according to claim 1, comprising:
- a brake rotor (2) having a predefined rotational axis (A-A); said brake rotor (2) having a disc-shaped brake body (3); said disc-shaped brake body (3) comprising a brake disc attachment portion (4) to a brake disc support (5) having an attachment portion rest surface (6) suitable to abut against said brake disc support (5); said disc-shaped brake body (3) comprising a braking portion forming a braking band (7) having opposite first and second braking surfaces (8, 9); said first and second braking surfaces (8, 9) being substantially mutually parallel;
- an excitation ring or pulse generating ring or phonic wheel (11) having a predefined rotational axis (A-A); said phonic wheel (11) having a phonic wheel disc-shaped body (12) comprising a facing surface (13); said facing surface (13) being suitable to face a phonic wheel reading sensor (14) to detect the rotation, or derived signals, of the phonic wheel (11); wherein
- said disc-shaped brake body (3) and said phonic wheel disc-shaped body (12) are in a single piece;
- said rest surface (6) of the brake disc attachment portion (4) is, under unworn conditions, substantially coplanar to said first braking surface (8); and
- said surface (13) facing the sensor of the phonic wheel disc-shaped body (12) is substantially coplanar to one of the braking surfaces (9) of the braking band (7).

3. The assembly according to claim 1 or 2, wherein said phonic wheel disc-shaped body (12) comprises a second phonic wheel surface (15) opposite said surface (13) facing the sensor and wherein said facing surface (13) and said second phonic wheel surface (15) are substantially mutually parallel.

4. The assembly according to claim 1 or 2 or 3, wherein said surface (13) facing the sensor of the phonic wheel disc-shaped body (12) is substantially coplanar to said second braking surface (9) of the braking band (7) and/or wherein said brake disc attachment portion (4) comprises securing means receiving seats (16) suitable to receive securing means (17) of the brake rotor (2) to a brake disc support (5) thereof and wherein said securing means receiving seats (16) comprise at least one embedding widening or undercut (18) suitable to receive by embedding portions of the securing means (17) so that they do not project in a direction parallel to the axis (A-A) relative to the brake disc attachment portion (4) and wherein said at least one embedding undercut (18) is arranged on the same side of the surface (13) facing the sensor of the phonic wheel disc-shaped body (12).

5. The assembly according to any of the preceding claims, wherein said attachment portion rest surface (6) is orthogonal to said rotational axis (A-A), and/or wherein said first and second braking surfaces (8, 9) are substantially mutually parallel and define therebetween, under unworn conditions, a predefined braking band thickness (10) and wherein said phonic wheel disc-shaped body (12) comprises a second phonic wheel surface (15) opposite said surface (13) facing the sensor and wherein said facing surface (13) and said second phonic wheel surface (15) are substantially mutually parallel and mutually define a predefined phonic wheel thickness (28) and wherein said braking band thickness (10) is substantially equal to said phonic wheel thickness (28).

6. The assembly according to any of the preceding claims, wherein said plurality of recesses or reliefs (29) of said facing surface (13) of the phonic wheel (11) have an extension having an axis (F-F) substantially parallel to the axis of the brake rotor (2) or to the axis of the phonic wheel (11), so as to be able to arrange the sensor (14) laterally to the phonic wheel (11), and/or wherein
said recesses or reliefs (29) extend with an axis (F-F) parallel to the extension axis (T-T) of braking band holes (23) suitable to cool the braking band (7) and grind disc brake pads (30) housed in a disc brake caliper body (31) and biased by thrust means (32) to abut against the braking surfaces (8, 9) of the braking band (7) to exert a braking action on a vehicle on which said assembly (1) is associated.

7. The assembly according to any of the preceding claims, wherein said recesses or reliefs (29), for example, holes, of the phonic wheel (11) have dimensions transversal to the extension (F-F) thereof, for example, a diameter, having an extent substantially equal to the braking band thickness (10) and/or the phonic wheel thickness (28).

8. The assembly according to any of the preceding claims, wherein said recesses or reliefs (29), for example, holes, of the phonic wheel (11) form, in the circumferential direction with the remaining portion of the phonic wheel disc-shaped body (12), a ratio substantially of 50%, for example, said recesses or reliefs are holes (29), and by measuring in the circumferential direction passing through the center of said holes (29), a ratio between the spaces of the holes and the solid part of the phonic wheel body is detected, which is substantially of 50%.

9. The assembly according to any of the preceding claims, wherein said recesses or reliefs (29) are spaced apart from each other by a predefined phonic wheel distance (d) and said recesses or reliefs (29) are spaced from the braking band (7) substantially by a distance (r) substantially equal to said phonic wheel distance (d).

10. The assembly according to any of the preceding claims, wherein said recesses or reliefs (29) have a section transversally to the extension (F-F) thereof that is substantially oval-shaped, for example, enlarged in the direction radial to the phonic wheel rotational axis (A-A).

11. A motor vehicle comprising a wheel (33) operatively connected to a transmission capable of applying a torque to said wheel (33), wherein a disc assembly for disc brake (19) as defined in any of the preceeding claims is connected to said wheel.

## Patentansprüche

1. Scheibenanordnung für eine Scheibenbremse (19), umfassend:
- einen Bremsrotor (2) mit einer vordefinierten Rotationsachse (A-A); wobei der Bremsrotor (2) einen scheibenförmigen Bremsenkörper (3) aufweist; wobei der scheibenförmige Bremsenkörper (3) einen Bremsscheiben-Anbringungsabschnitt (4) an einen Bremsscheiben-Träger (5) mit einer Anbringungsabschnitt-Anlagefläche (6) umfasst, welche geeignet ist, gegen den Bremsscheiben-Träger (5) anzuliegen; wobei der Bremsscheiben-Anbringungsabschnitt (4) Sicherungsmittel-Aufnahmesitze (16) umfasst, welche geeignet sind, Sicherungsmittel (17) des Bremsrotors (2) aufzunehmen, um einen Bremsscheiben-Träger (5) davon zu bremsen; wobei der scheibenförmige Bremsenkörper (3) einen Bremsabschnitt umfasst, welcher ein Bremsband (7) bildet, welches gegenüberliegende erste und zweite Bremsflächen (8, 9) aufweist; wobei die ersten und zweiten Bremsflächen (8, 9) im Wesentlichen wechselseitig parallel sind und da dazwischen unter nicht-abgenutzten Bedingungen eine Bremsband-Dicke (10) definieren; wobei die Anlagefläche (6) des Bremsscheiben-Anbringungsabschnitts (4) unter nicht-abgenutzten Bedingungen im Wesentlichen koplanar zu der ersten Bremsfläche (8) ist;
- einen Anregungsring oder Pulserzeugungs-Ring oder ein phonisches Rad (11) mit einer vordefinierten Rotationsachse (A-A); wobei das phonische Rad (11) einen scheibenförmigen Körper (12) des phonischen Rads aufweist, welcher eine zugewandte Fläche (13) umfasst; wobei die zugewandte Fläche (13) dazu geeignet ist, einem Sensor (14) zugewandt zu sein; wobei die zugewandte Fläche (13) eine Mehrzahl von Ausnehmungen oder Vorsprüngen umfasst, welche in Umfangsrichtung gleichmäßig verteilt sind und dazu geeignet sind, dem Sensor (14) zugewandt zu sein;
- einen Lesesensor (14) für das phonische Rad zur Detektion der Rotation oder abgeleiteter Signale des phonischen Rads (11);
- Sicherungsmittel (17) des Bremsrotors (2) an den Bremsscheiben-Träger (5) davon; und wobei
- der scheibenförmige Bremsenkörper (3) und der scheibenförmige Körper (12) des phonischen Rads einstückig sind;
- wobei die Sicherungsmittel-Aufnahmesitze (16) Einbettungsaufweitungen (18) umfassen, welche geeignet sind, durch Einbetten Abschnitte der Sicherungsmittel (17) derart aufzunehmen, dass sie nicht bezüglich des Bremsscheiben-Anbringungsabschnitts (4) vorstehen, und wobei die Einbettungsaufweitungen (18) an derselben Seite der Fläche (13) angeordnet sind, welche dem Sensor des scheibenförmigen Körpers (12) des phonischen Rads zugewandt ist, so dass die Sicherungsmittel (17) in die Aufnahmesitze (16) an derselben Seite des Lesesensors (14) für das phonische Rad eingesetzt sind; und wobei
die zugewandte Fläche (13) eine Mehrzahl von Ausnehmungen oder Vorsprüngen (29) umfasst, welche in Umfangsrichtung gleichmäßig verteilt und dazu geeignet sind, dem Sensor (14) zugewandt zu sein;
**dadurch gekennzeichnet, dass**
die Ausnehmungen oder Vorsprünge Durchgangslöcher sind;
das phonische Rad (11) radial bezüglich der Rotationsachse zwischen dem Bremsscheiben-Anbringungsabschnitt (4) und dem Bremsabschnitt angeordnet ist, welcher das Bremsband (7) bildet.

2. Scheibenanordnung für eine Scheibenbremse (1) nach Anspruch 1, umfassend:
- einen Bremsrotor (2) mit einer vordefinierten Rotationsachse (A-A); wobei der Bremsrotor (2) einen scheibenförmigen Bremsenkörper (3) aufweist; wobei der scheibenförmige Bremsenkörper (3) einen Bremsscheiben-Anbringungsabschnitt (4) an einen Bremsscheiben-Träger (5) mit einer Anbringungsabschnitt-Anlagefläche (6) umfasst, welche geeignet ist, gegen den Bremsscheiben-Träger (5) anzuliegen; wobei der der scheibenförmige Bremsenkörper (3) einen Bremsabschnitt umfasst, welcher ein Bremsband (7) mit gegenüberliegenden ersten und zweiten Bremsflächen (8, 9) bildet; wobei die ersten und zweiten Bremsflächen (8, 9) im Wesentlichen wechselseitig parallel sind;
- einen Anregungsring oder Pulserzeugungs-Ring oder ein phonisches Rad (11) mit einer vordefinierten Rotationsachse (A-A); wobei das phonische Rad (11) einen scheibenförmigen Körper (12) des phonischen Rads aufweist, welcher eine zugewandte Fläche (13) umfasst; wobei die zugewandte Fläche (13) dazu geeignet ist, einem Lesesensor (14) für das phonische Rad zur Detektion der Rotation oder abgeleiteter Signale des phonischen Rads (11) zugewandt zu sein; wobei
- der scheibenförmige Bremsenkörper (3) und der scheibenförmige Körper (12) des phonischen Rads einstückig sind;
- die Anlagefläche (6) des Bremsscheiben-Anbringungsabschnitts (4) unter nicht-abgenutzten Bedingungen im Wesentlichen koplanar zu der ersten Bremsfläche (8) ist; und
- die Fläche (13), welche dem Sensor des scheibenförmigen Körpers (12) des phonischen Rads zugewandt ist, im Wesentlichen koplanar zu einer der Bremsflächen (9) des Bremsbands (7) ist.

3. Anordnung nach Anspruch 1 oder 2, wobei der scheibenförmige Körper (12) des phonischen Rads eine zweite Fläche (15) des phonischen Rads gegenüber der Fläche (13) umfasst, welche dem Sensor zugewandt ist, und wobei die zugewandte Fläche (13) und die zweite Fläche (15) des phonischen Rads im Wesentlichen wechselseitig parallel sind.

4. Anordnung nach Anspruch 1 oder 2 oder 3, wobei die Fläche (13), welche dem Sensor des scheibenförmigen Körpers (12) des phonischen Rads zugewandt ist, im Wesentlichen koplanar zu der zweiten Bremsfläche (9) des Bremsbands (7) ist und/oder wobei der Bremsscheiben-Anbringungsabschnitt (4) Sicherungsmittel-Aufnahmesitze (16) umfasst, welche geeignet sind, Sicherungsmittel (17) des Bremsrotors (2) an einen Bremsscheiben-Träger (5) davon aufzunehmen, und wobei die Sicherungsmittel-Aufnahmesitze (16) wenigstens eine Einbettungsaufweitung oder eine Hinterschneidung (18) umfassen, welche geeignet ist, durch Einbetten Abschnitte der Sicherungsmittel (17) derart aufzunehmen, dass sie nicht in einer Richtung parallel zu der Achse (A-A) bezüglich des Bremsscheiben-Anbringungsabschnitts (4) vorstehen, und wobei die wenigstens eine Einbettungshinterschneidung (18) an derselben Seite der Fläche (13) angeordnet ist, welche dem Sensor des scheibenförmigen Körpers (12) des phonischen Rads zugewandt ist.

5. Anordnung nach einem der vorhergehenden Ansprüche, wobei die Anbringungsabschnitt-Anlagefläche (6) orthogonal zu der Rotationsachse (A-A) ist, und/oder wobei die ersten und zweiten Bremsflächen (8, 9) im Wesentlichen wechselseitig parallel sind und da dazwischen unter nicht-abgenutzten Bedingungen eine vordefinierte Bremsband-Dicke (10) definieren, und wobei der scheibenförmige Körper (12) des phonischen Rads eine zweite Fläche (15) des phonischen Rads gegenüber der Fläche (13) umfasst, welche dem Sensor zugewandt ist, und wobei die zugewandte Fläche (13) und die zweite Fläche (15) des phonischen Rads im Wesentlichen wechselseitig parallel sind und gemeinsam eine vordefinierte Dicke (28) des phonischen Rads definieren, und wobei die Bremsband-Dicke (10) im Wesentlichen gleich zu der Dicke (28) des phonischen Rads ist.

6. Anordnung nach einem der vorhergehenden Ansprüche, wobei die Mehrzahl von Ausnehmungen oder Vorsprüngen (29) der zugewandten Fläche (13) des phonischen Rads (11) eine Erstreckung mit einer Achse (F-F) aufweisen, welche im Wesentlichen parallel zu der Achse des Bremsrotors (2) oder zu der Achse des phonischen Rads (11) ist, um so in der Lage zu sein, den Sensor (14) lateral zu dem phonischen Rad (11) anzuordnen, und/oder wobei sich die Ausnehmungen oder Vorsprünge (29) mit einer Achse (F-F) parallel zu der Erstreckungsachse (T-T) von Bremsband-Löchern (23) erstrecken, welche geeignet sind, das Bremsband (7) zu kühlen und Scheibenbremsen-Beläge (30) zu reiben, welche in einem Scheibenbremsen-Sattelkörper (31) beherbergt sind und durch Schubmittel (32) dazu vorbelastet sind, gegen die Bremsflächen (8, 9) des Bremsbands (7) anzuliegen, um eine Bremswirkung auf ein Fahrzeug auszuüben, welchem die Anordnung (1) zugeordnet ist.

7. Anordnung nach einem der vorhergehenden Ansprüche, wobei die Ausnehmungen oder Vorsprünge (29), beispielsweise Löcher, des phonischen Rads (11) Abmessungen transversal zu der Erstreckung (F-F) davon aufweisen, beispielsweise einen Durchmesser, mit einer Erstreckung im Wesentlichen gleich der Bremsband-Dicke (10) und/oder der Dicke (28) des phonischen Rads.

8. Anordnung nach einem der vorhergehenden Ansprüche, wobei die Ausnehmungen oder Vorsprünge (29), beispielsweise Löcher, des phonischen Rads (11) in der Umfangsrichtung mit dem verbleibenden Abschnitt des scheibenförmigen Körpers (12) des phonischen Rads ein Verhältnis von im Wesentlichen 50% bilden, wobei die Ausnehmungen oder Vorsprünge beispielsweise Löcher (29) sind, und wobei durch Messen in der Umfangsrichtung, welche durch das Zentrum der Löcher (29) hindurchtritt, ein Verhältnis zwischen den Räumen der Löcher und dem festen Teil des Körpers des phonischen Rads detektiert wird, welches im Wesentlichen 50% beträgt.

9. Anordnung nach einem der vorhergehenden Ansprüche, wobei die Ausnehmungen oder Vorsprünge (29) voneinander um einen vordefinierten Abstand (d) des phonischen Rads beabstandet sind, und die Ausnehmungen oder Vorsprünge (29) von dem Bremsband (7) im Wesentlichen um einen Abstand (r) beabstandet sind, welcher im Wesentlichen gleich dem Abstand (d) des phonischen Rads ist.

10. Anordnung nach einem der vorhergehenden Ansprüche, wobei die Ausnehmungen oder Vorsprünge (29) einen Querschnitt transversal zu der Erstreckung (F-F) davon aufweisen, welcher im Wesentlichen ovalförmig ist, beispielsweise vergrößert in der Richtung radial zu der Rotationsachse (A-A) des phonischen Rads.

11. Motorfahrzeug, umfassend ein Rad (33), welches betriebsmäßig mit einem Getriebe verbunden ist, welches in der Lage ist ein Drehmoment auf das Rad (33) auszuüben, wobei eine Scheibenanordnung für eine Scheibenbremse (19), wie in einem der vorhergehenden Ansprüche definiert, mit dem Rad verbunden ist.

## Revendications

1. Ensemble disque pour frein à disque (19) comprenant :
- un rotor de frein (2) ayant un axe de rotation prédéfini (A-A) ; ledit rotor de frein (2) ayant un corps de frein en forme de disque (3) ; ledit corps de frein en forme de disque (3) comprenant une partie de fixation de disque de frein (4) à un support de disque de frein (5) ayant une surface d'appui de partie de fixation (6) appropriée pour venir en butée contre ledit support de disque de frein (5) ; ladite partie de fixation de disque de frein (4) comprend des sièges de réception de moyens de fixation (16) appropriés pour recevoir des moyens de fixation (17) du rotor de frein (2) sur un support de disque de frein (5) de celui-ci ; ledit corps de frein en forme de disque (3) comprenant une partie de freinage formant une bande de freinage (7) ayant des première et seconde surfaces de freinage opposées (8, 9) ; lesdites première et seconde surfaces de freinage (8, 9) étant sensiblement mutuellement parallèles et définissant entre elles, dans des conditions d'absence d'usure, une épaisseur de bande de freinage (10) ; dans lequel ladite surface d'appui (6) de la partie de fixation de disque de frein (4) étant, dans des conditions d'absence d'usure, sensiblement coplanaire avec ladite première surface de freinage (8) ;
- une bague d'excitation ou une bague générant des impulsions ou une roue phonique (11) ayant un axe de rotation prédéfini (A-A) ; ladite roue phonique (11) ayant un corps en forme de disque de roue phonique (12) comprenant une surface faisant face (13) ; ladite surface faisant face (13) étant appropriée pour faire face à un capteur (14) ; ladite surface faisant face (13) comprend une pluralité d'évidements ou de reliefs répartis uniformément de manière circonférentielle et appropriés pour faire face audit capteur (14) ;
- un capteur de lecture de roue phonique (14) pour détecter la rotation, ou des signaux dérivés, de la roue phonique (11) ;
- des moyens de fixation (17) du rotor de frein (2) au support de disque de frein (5) de celui-ci ; et dans lequel
- ledit corps de frein en forme de disque (3) et ledit corps en forme de disque de roue phonique (12) sont d'un seul tenant ;
- lesdits sièges de réception de moyens de fixation (16) comprennent des élargissements d'intégration (18) appropriés pour recevoir des parties d'intégration des moyens de fixation (17) de telle sorte qu'elles ne font pas saillie par rapport à la partie de fixation de disque de frein (4) et dans lequel lesdits élargissements d'intégration (18) sont agencés sur le même côté de la surface (13) faisant face au capteur du corps en forme de disque de roue phonique (12), de telle sorte que lesdits moyens de fixation (17) sont insérés dans les sièges de réception (16) sur le même côté que le capteur de lecture de roue phonique (14) ; et dans lequel
ladite surface faisant face (13) comprend une pluralité d'évidements ou de reliefs (29) répartis uniformément de manière circonférentielle et appropriés pour faire face audit capteur (14) ;
**caractérisé en ce que**
lesdits évidements ou reliefs sont des trous traversants ;
ladite roue phonique (11) est agencée radialement par rapport à l'axe de rotation entre ladite partie de fixation de disque de frein (4) et ladite partie de freinage formant la bande de freinage (7).

2. Ensemble disque pour frein à disque (1) selon la revendication 1, comprenant :
- un rotor de frein (2) ayant un axe de rotation prédéfini (A-A) ; ledit rotor de frein (2) ayant un corps de frein en forme de disque (3) ; ledit corps de frein en forme de disque (3) comprenant une partie de fixation de disque de frein (4) à un support de disque de frein (5) ayant une surface d'appui de partie de fixation (6) appropriée pour venir en butée contre ledit support de disque de frein (5) ; ledit corps de frein en forme de disque (3) comprenant une partie de freinage formant une bande de freinage (7) ayant des première et seconde surfaces de freinage opposées (8, 9) ; lesdites première et seconde surfaces de freinage (8, 9) étant sensiblement mutuellement parallèles ;
- une bague d'excitation ou une bague générant des impulsions ou une roue phonique (11) ayant un axe de rotation prédéfini (A-A) ; ladite roue phonique (11) ayant un corps en forme de disque de roue phonique (12) comprenant une surface faisant face (13) ; ladite surface faisant face (13) étant appropriée pour faire face à un capteur de lecture de roue phonique (14) pour détecter la rotation, ou des signaux dérivés, de la roue phonique (11) ; dans lequel
- ledit corps de frein en forme de disque (3) et ledit corps en forme de disque de roue phonique (12) sont d'un seul tenant ;
- ladite surface d'appui (6) de la partie de fixation de disque de frein (4) est, dans des conditions d'absence d'usure, sensiblement coplanaire avec ladite première surface de freinage (8) ; et
- ladite surface (13) faisant face au capteur du corps en forme de disque de roue phonique (12) est sensiblement coplanaire avec l'une des surfaces de freinage (9) de la bande de freinage (7).

3. Ensemble selon la revendication 1 ou 2, dans lequel ledit corps en forme de disque de roue phonique (12) comprend une seconde surface de roue phonique (15) opposée à ladite surface (13) faisant face au capteur et dans lequel ladite surface faisant face (13) et ladite seconde surface de roue phonique (15) sont sensiblement mutuellement parallèles.

4. Ensemble selon la revendication 1 ou 2 ou 3, dans lequel ladite surface (13) faisant face au capteur du corps en forme de disque de roue phonique (12) est sensiblement coplanaire avec ladite seconde surface de freinage (9) de la bande de freinage (7) et/ou dans lequel ladite partie de fixation de disque de frein (4) comprend des sièges de réception de moyens de fixation (16) appropriés pour recevoir des moyens de fixation (17) du rotor de frein (2) sur un support de disque de frein (5) de celui-ci et dans lequel lesdits sièges de réception de moyens de fixation (16) comprennent au moins un élargissement ou une découpe d'intégration (18) approprié(e) pour recevoir des parties d'intégration des moyens de fixation (17) de telle sorte qu'elles ne font pas saillie dans une direction parallèle à l'axe (A-A) par rapport à la partie de fixation de disque de frein (4) et dans lequel ladite au moins une découpe d'intégration (18) est agencée sur le même côté de la surface (13) faisant face au capteur du corps en forme de disque de roue phonique (12).

5. Ensemble selon l'une quelconque des revendications précédentes, dans lequel ladite surface d'appui de partie de fixation (6) est orthogonale audit axe de rotation (AA), et/ou dans lequel lesdites première et seconde surfaces de freinage (8, 9) sont sensiblement mutuellement parallèles et définissent entre elles, dans des conditions d'absence d'usure, une épaisseur de bande de freinage prédéfinie (10) et dans lequel ledit corps en forme de disque de roue phonique (12) comprend une seconde surface de roue phonique (15) opposée à ladite surface (13) faisant face au capteur et dans lequel ladite surface faisant face (13) et ladite seconde surface de roue phonique (15) sont sensiblement mutuellement parallèles et définissent mutuellement une épaisseur de roue phonique prédéfinie (28) et dans lequel ladite épaisseur de bande de freinage (10) est sensiblement égale à ladite épaisseur de roue phonique (28).

6. Ensemble selon l'une quelconque des revendications précédentes, dans lequel ladite pluralité d'évidements ou de reliefs (29) de ladite surface faisant face (13) de la roue phonique (11) ont une extension ayant un axe (F-F) sensiblement parallèle à l'axe du rotor de frein (2) ou à l'axe de la roue phonique (11), afin d'être apte à agencer le capteur (14) latéralement par rapport à la roue phonique (11), et/ou dans lequel
lesdits évidements ou reliefs (29) s'étendent avec un axe (F-F) parallèle à l'axe d'extension (T-T) de trous de bande de freinage (23) appropriés pour refroidir la bande de freinage (7) et meuler des plaquettes de frein à disque (30) logées dans un corps d'étrier de frein à disque (31) et sollicitées par des moyens de poussée (32) pour venir en butée contre les surfaces de freinage (8, 9) de la bande de freinage (7) pour exercer une action de freinage sur un véhicule sur lequel ledit ensemble (1) est associé.

7. Ensemble selon l'une quelconque des revendications précédentes, dans lequel lesdits évidements ou reliefs (29), par exemple, des trous, de la roue phonique (11) ont des dimensions transversales à leur extension (F-F), par exemple, un diamètre, ayant une étendue sensiblement égale à l'épaisseur de bande de freinage (10) et/ou à l'épaisseur de roue phonique (28).

8. Ensemble selon l'une quelconque des revendications précédentes, dans lequel lesdits évidements ou reliefs (29), par exemple, des trous, de la roue phonique (11) forment, dans la direction circonférentielle avec la partie restante du corps en forme de disque de roue phonique (12), un rapport sensiblement de 50 %, par exemple, lesdits évidements ou reliefs sont des trous (29), et par une mesure dans la direction circonférentielle traversant le centre desdits trous (29), un rapport entre les espaces des trous et la partie solide du corps de roue phonique est détecté, lequel est sensiblement de 50 %.

9. Ensemble selon l'une quelconque des revendications précédentes, dans lequel lesdits évidements ou reliefs (29) sont espacés les uns des autres par une distance de roue phonique prédéfinie (d) et lesdits évidements ou reliefs (29) sont espacés de la bande de freinage (7) sensiblement par une distance (r) sensiblement égale à ladite distance de roue phonique (d).

10. Ensemble selon l'une quelconque des revendications précédentes, dans lequel lesdits évidements ou reliefs (29) ont une section transversale à leur extension (F-F) qui est sensiblement de forme ovale, par exemple, élargie dans la direction radiale par rapport à l'axe de rotation de roue phonique (A-A).

11. Véhicule automobile comprenant une roue (33) reliée de manière fonctionnelle à une transmission apte à appliquer un couple à ladite roue (33), dans lequel un ensemble disque pour frein à disque (19) selon l'une quelconque des revendications précédentes est relié à ladite roue.
